(19) **Europäisches Patentamt**
**European Patent Office**
**Office européen des brevets**

(11) **EP 1 523 836 B1**

(12) **EUROPEAN PATENT SPECIFICATION**

(45) Date of publication and mention
of the grant of the patent:
**06.12.2017 Bulletin 2017/49**

(51) Int Cl.:
**H04L 12/801** *(2013.01)*  **H04L 12/841** *(2013.01)*
**H04L 12/807** *(2013.01)*  H04L 29/06 *(2006.01)*
H04L 12/825 *(2013.01)*  H04L 29/08 *(2006.01)*

(21) Application number: **03764972.0**

(22) Date of filing: **11.07.2003**

(86) International application number:
**PCT/EP2003/007530**

(87) International publication number:
**WO 2004/010657 (29.01.2004 Gazette 2004/05)**

(54) **METHOD AND APPARATUS FOR SELECTING A WINDOW SIZE FOR A PACKET SWITCHED CONNECTION**

VERFAHREN UND VORRICHTUNG ZUM AUSWÄHLEN EINER DURCHLASSFENSTERGRÖSSE FÜR EINE PAKETVERMITTELTE VERBINDUNG

PROCÉDÉ ET APPAREIL DE SÉLECTION D'UNE TAILLE DE FENÊTRE DE TRANSMISSION POUR UNE CONNEXION A COMMUTATION PAR PAQUETS

(84) Designated Contracting States:
**AT BE BG CH CY CZ DE DK EE ES FI FR GB GR HU IE IT LI LU MC NL PT RO SE SI SK TR**

(30) Priority: **19.07.2002 EP 02016057**

(43) Date of publication of application:
**20.04.2005 Bulletin 2005/16**

(73) Proprietor: **Telefonaktiebolaget LM Ericsson (publ)**
**164 83 Stockholm (SE)**

(72) Inventors:
• **WAGER, Stefan**
**FIN-02770 Esbo (FI)**
• **LUDWIG, Reiner**
**52393 Huertgenwald (DE)**
• **MEYER, Michael**
**52080 Aachen (DE)**

• **JÖNSSON, Anders**
**S-115 24 Stockholm (SE)**
• **EKSTRÖM, Hannes**
**52062 Aachen (DE)**

(74) Representative: **Ericsson**
**Patent Development**
**Torshamnsgatan 21-23**
**164 80 Stockholm (SE)**

(56) References cited:
**EP-A- 0 948 168     WO-A-01/93513**

• **M. ALLMAN, V. PAXSON, W. STEVENS: "TCP Congestion Control" IETF RFC 2581, [Online] April 1999 (1999-04), pages 1-14, XP002228876 Retrieved from the Internet: <URL:http://www.cs.utk.edu/~moore/RFC-PDF/ rfc2581.pdf> [retrieved on 2003-01-28] cited in the application**

**Description**

**Technical field of the invention**

The invention relates to a method for selecting a window size for a packet switched connection between a first and a second party. The associated window is used by a sending party for a window based congestion control mechanism for avoiding or handling congestion on a communication path. The window size defines the maximum number of data packets that can be sent by a sending party before an acknowledgement of the reception of a packet is received by said sending party.

**Description of related art**

Communication systems using window based congestion control are well known as for example systems operating according to a TCP/IP (Transmission Control Protocol / Internet Protocol) or systems operating according to a SCTP (Stream Control Transmission Protocol). Such systems permit the sending of a certain number of packets from a sender to a receiver, before an acknowledgement of a reception of a packet is received at the sender. The number of packets that may be sent unacknowledged is called window size. As multiple packets are sent before the reception of an acknowledgement for at least one of the packets, the efficacy of the use of a transmission channel is improved. In general, a larger window size increases the utilisation of transmission resources.

However, a fixed larger initial window bears the risk that the window is too large in some situations, where congestion occurs somewhere in the network. In such situations a too large window contributes on top to the congestion, which could lead potentially to problems.

Besides the initial window, TCP uses some more window sizes to reinitialise the congestion window after certain events. The definitions of the window sizes are described in M.Allman, V. Paxson, W. Stevens: TCP Congestion Control, RFC2581, published April 1999 as IW (initial window), which is the size of the sender's congestion window after the three-way handshake is completed, LW (loss window), which is the size of the congestion window after a TCP sender detects loss using its retransmission timer, and RW (restart window) as the size of the congestion window after a TCP restarts transmission after an idle period. According to M. Allman, V. Paxson, W. Stevens, the initial window can be either 1 or 2 segments. They define a loss window size of 1 segment and a restart window size that should have the same value as the initial window size.

M. Allman, S. Floyd, C. Partridge suggest a different initial window size in:" Increasing TCP's Initial Window", RFC2414, published September 1998. According to them, the initial window size can be set to

$$\text{Initial window} = \min \left( 4*MSS, \max \left( 2*MSS, 4380 \text{ bytes} \right) \right)$$

wherein MSS is the maximum segment size, min is the minimum function and max the maximum function.

Applying this to the most popular MSS (Maximum Segment Size) yields an initial window of 4 segments for 512 or 536 bytes while 3 segments for 1460 bytes.

Increasing a TCP sender's IW, LW, and RW can significantly improve end-to-end performance but also bears the risk of causing network congestion. This is why it is strongly discouraged to do this when running TCP over the wide-area Internet. However, when running TCP only across a "private" network, e.g., when running it between a proxy and a mobile terminal across a wireless access network, one could afford large values of IW, LW, and RW. Nevertheless, if congestion can also occur within that "private" network, it is problematic to find optimal values for IW, LW, and RW.

H. Balakrishnan, S. Seshan introduce in "The Congestion Manager", RFC3124, published June 2001 the usage of known window sizes for the set up of a new connection. However, this mechanism is limited to the use in the case that the sender and receiver of the new connection are the same as of an ongoing connection.

EP 0 948 168 A1 relates to a method and device for data flow control, particularly in a TCP connection with sliding windows wherein the window size is adapted in order to avoid congestion, which takes properties of the connection between the communication partners into account. Such properties include the bit rate of a connection between the communication partners and a round trip time, from which a capacity or bottleneck of the connection and thus a limit for a window size can be determined.

Currently there is no mechanism that enables to adapt the window size for a packet switched connection in a way that avoids the waste of transmission resources.

Therefore it is object of the invention to provide a method and means for implementing the method that enables to adapt the window size for a packet switched connection in a way that avoids the waste of transmission resources.

This is solved by the method of claim 1 and the window size selecting unit of claim 17.

It is advantageous that window sizes are determined by using information about the pipe capacity of a connection the window will be used for. By this a more appropriate window size can be determined thus increasing the utilisation of transmission resources. It is further advantageous that an upper threshold value is determined for window sizes. An increase of window sizes above the upper threshold value would lead to packet losses and by that to less efficient use of transmission capacities.

Further advantageous embodiments can be derived from the dependent claims.

## Summary

The invention introduces a solution that is applicable to any end-to-end protocol that uses window-based congestion control. In particular, it applies to TCP, but also to SCTP (Stream Control Transmission Protocol).

The invented method makes IW, LW, and RW adaptive to the communication network. This is especially valuable for, but not limited to, communication networks comprising an air interface. The maximum bit rate on an air interface varies strongly while transmission capacity on the air interface is expensive. The invented method can be used to calculate IW, RW and LW together if they are set to equal values or each of them may be selected separately. The invented method is used to select window sizes based on the pipe capacity of a connection, the destination of a connection and the loss history of a connection.

Furthermore the loss history of connections with the same pipe capacity or with a pipe capacity that falls into the same predefined range of pipe capacities can be taken into account.

Therefore a method for selecting a window size for a communication system for connecting a first and a second party is introduced. The communication system comprises means for setting up a packet switched connection between the parties, wherein a sending party is adapted to use a window based congestion control mechanism for avoiding or handling congestion. The window defines the maximum number of data packets that may be sent by a sender before an acknowledgement of the reception of a packet is received by the sender. The following steps are performed when executing the method:

retrieving information about a bit rate of a link belonging to a path across which the connection between the parties is set up, retrieving information about an estimation of a round trip time on the connection between the parties, determining an estimation of a pipe capacity for the connection between the parties according to the retrieved bit rate and the estimation of the round trip time of the connection, determining an upper threshold value for the window size based on the pipe capacity, and selecting a window size value above zero and below or equal to the upper threshold value, wherein the selected window size is used for a further connection with the same pipe capacity or with a pipe capacity within the same predefined range of pipe capacities, that is set-up or restarted.

The invented method can comprise the additional steps of storing the selected window size together with an indication of the pipe capacity, or a predefined range of pipe capacities comprising the pipe capacity, of the connection. The storing of the selected window size has the advantage that a selected window size can be used for further connections. The storing of the pipe capacity or a predefined range of pipe capacities comprising the pipe capacity, of the connection has the advantage that a stored window size can be selected depending on the pipe capacity.

The invented method can further comprise the step of determining a destination of the connection. In that case, the selected window size is stored together with an identification of said destination. This enables to select a stored window size depending on the pipe capacity and the destination of a connection. If the communication system is a cellular communication system, a destination is one of a location area, a routing area, a cell, a service area or an area served by a radio network controller, a mobile services switching centre, a radio base station, or a serving general packet radio service support node.

In an embodiment of the invention, the communication system is a cellular communication system and the link is a wireless link.

In a further embodiment of the invention, the window is one of an initial window, a loss window or a restart window.

In the method and its embodiments, a party may be one of a proxy server, a mobile user equipment, a radio network controller, a general packet radio service support node, a radio base station, and a fixed network terminal.

In a preferred embodiment of the invention, the upper threshold value is in a range of plus or minus two packets around twice the pipe capacity or twice the higher value of the predefined range of pipe capacities comprising the pipe capacity of the connection the window is used for.

The method and its embodiments may comprise the additional steps of receiving a congestion indication for a connection before an acknowledgement for all packets sent in an initial window, a loss window, or a restart window is received, and of selecting a smaller window size. In a preferred embodiment of the invention, the selected smaller window size is about half the size of the window size used before, unless the former window size was one.

The method and its embodiments may comprise the additional step of detecting an increase of the pipe capacity of a connection, and selecting a new window size for said connection, wherein the new window size is one of an initial window size, a loss window size or a restart window that are used for connections with the same pipe capacity or with a pipe capacity that falls into the same predefined range of pipe capacities as the increased pipe capacity, or wherein, if none of said window sizes is available, a value is selected for the new window size that is n times the increased pipe capacity, with n greater than or equal to 1 and smaller than or equal to 2. An appropriate upper threshold value for the new pipe capacity that allows increasing a congestion window up to the selected window is determined and used. In an embodiment of the invention, a congestion window used for the connection is set to the selected window size. In a preferred embodiment a slow start threshold value for the connection is set to said selected window size.

The invented method and its embodiments may also comprise the additional steps of monitoring for a predefined number of seconds or number of connection set-ups or restarts that no congestion indication is received for a connection before an acknowledgement for all packets sent in an initial window a loss window or a restart window is received, and selecting a larger window size that is smaller than or equals the upper threshold value. In a preferred embodiment, the selected larger window size differs from the window size used before by a predefined constant number.

In an embodiment of the invented method, the monitoring and the selecting of a larger window size are performed separately for different destinations.

As mentioned above, the selected window size is used for a further connection with the same destination and the same pipe capacity or with a pipe capacity that falls into the same predefined range of pipe capacities that is set-up, restarted or wherein a packet loss was detected. That is connections with the same pipe capacity or with a pipe capacity that falls into the same predefined range of pipe capacities are treated as a group and that connections that belong to said group have the same IW, LW and RW.

The invention further relates to a window size selecting unit for a communications system for connecting a first and a second party, wherein a sending party is adapted to use a window based congestion control mechanism for avoiding or handling congestion on a communication path. The window is defining the maximum number of data packets that may be sent by a sender before the sender receives an acknowledgement of the reception of a packet. The window size selecting unit comprises an input/output unit for sending and receiving data, a processing unit for controlling the other units, and is characterised by a selection unit for selecting a window size above zero and below or equal to an upper threshold value for a connection between the parties, wherein the upper threshold value for the window size is determined based on the pipe capacity. The window size selecting unit further comprises a storage for storing window sizes for connections of the same pipe capacity or within the same range of pipe capacity together with an information about a pipe capacity and a comparing unit for comparing stored pipe capacities and determined pipe capacities.

The window size selecting unit may further comprise a destination determining unit for determining a destination of a connection, wherein the storage is adapted to store an identification of a destination together with the window size and the information about a pipe capacity, and wherein the comparing unit is adapted to compare stored destinations and determined destinations.

## Brief description of the figures

Figure 1 depicts a schematic of a communication path between a first and a second party.
Figure 2 depicts a flow chart describing the invented method.
Figure 3a depicts a flow chart describing a section the invented method.
Figure 3b depicts a flow chart describing a further section the invented method.
Figure 3c depicts a flow chart describing a further section the invented method.
Figure 3d depicts a flow chart describing a section of a preferred embodiment of the invented method.
Figure 3e depicts a flow chart describing a further section of a preferred embodiment of the invented method.
Figure 3f depicts a flow chart describing a preferred embodiment of the invented method.
Figure 3g depicts a flow chart describing additional steps for an embodiment of the invented method.
Figure 4 depicts a window size selecting unit.
Figure 5 depicts a threshold value determining unit.

## Detailed description of the invention

In the following the invention will be described by means of figures and embodiments. The invention will be explained by using a network comprising a mobile network without restricting the invention to such implementation.

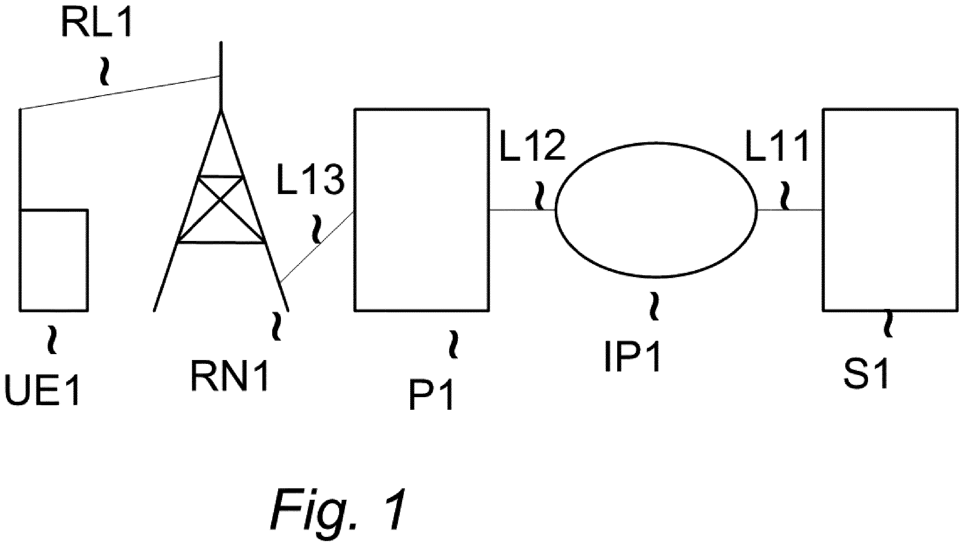

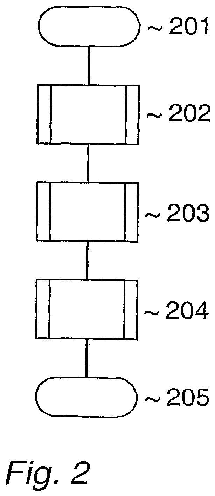

Figure 1 depicts a schematic of a communication path between a first party UE1 and a server S1. The server is connected via a link L11 to an IP based network IP1. Said IP based network is connected via a link L12 to a proxy server P1. Said proxy server is used to connect the fixed connected domain comprising the before mentioned components with a wireless domain via a link L13. The wireless domain comprises the network for mobile telecommunications RN1 and the first party UE1. The network for mobile telecommunications RN1 is connected to the proxy via said link L13. It is further connected to the first party UE1 via a radio link RL1. The proxy P1 acts as a party towards the server S1 and the first party UE1. In the following the connection radio link RL1, radio network RN1 and link L13, between the first party UE1 and the proxy P1 acting as a second party is regarded. The invented method is used to determine a window size for said connection. Figure 2 depicts a flow chart describing the invented method. After starting 201 the method a first optional step 202 is performed. At that step the proxy P1, acting as a window size determining unit, categorises all mobile terminals UE1 that currently terminate at least one active TCP (Transmission Control Protocol) flow at said proxy P1 into destinations, according to the location of the mobile terminal. Instead of TCP the invented method can be executed for any window based packet transmission protocol as for example SCTP or DCCP (Datagram Congestion Control Protocol).

In a step 203, the proxy, again acting as a window size determining unit, groups all TCP flows, with the same pipe capacity into the same group. In a preferred embodiment, TCP flows with a pipe capacity that falls into the same predefined range of pipe capacities are grouped into the same group. Said range is defined for example by operator settings or by a vendor of a computer program that controls the window size determining unit in a way that it executes the invented method. Step 203 is run separately and independently for those active TCP flows that terminate at the same destination. If the optional step 202 has not been performed, step 203 is run separately and independently for all active TCP flows.

At step 204, for all flows with the same pipe capacity or with a pipe capacity that falls into the same predefined range of pipe capacities a window size is determined. Step 204 can be performed several times until for each TCP flow a window size is determined. In an embodiment of the invention a window is one of an initial window, a loss window or a restart window.

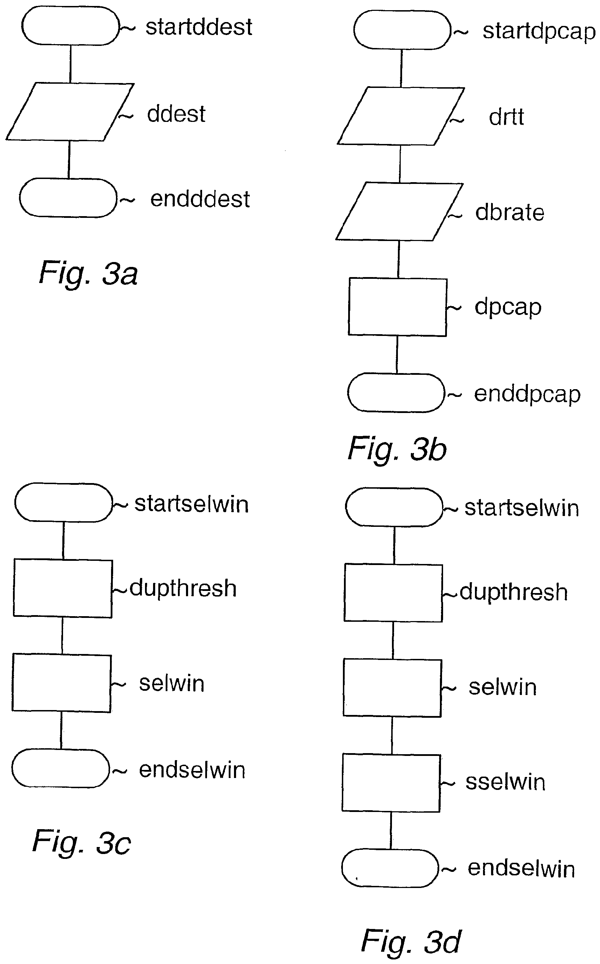

Step 202 is described in more detail by means of figure 3a. After starting step 202 in the sub-step startddest, the destination of a connection is determined in the sub-step ddest. This can be performed for example by gaining information from the radio network. Depending on which information from the mobile network is available to the window size determining unit and a preferred granularity, a destination can for example be one of a location area, a routing area, a cell, a service area or an area served by a radio network controller, a mobile services switching centre, a radio base station or a serving general packet radio service support node. After determining a destination for each connection the method shall be performed for, the step 202 is ended in the sub-step endddest. Alternatively the sequence of steps or each of the steps 202, 203 and 204 can be performed for a single destination, a group of destinations or all destinations. An advantage of this step 202 is that mobile terminals of the same destination share the same potential bottleneck link in the mobile network, and that different destinations have a different potential bottleneck link. Thus, it can be expected that mobile terminals of the same destination with the same potential bottleneck link share some transmission characteristics.

Step 203 is depicted in more detail in figure 3b.When step 203 is started in sub-step startdpcap, the estimation of the round trip time of the connection RL1, RN1, L13 between the parties P1, UE1 is determined in a sub-step drtt. The Round-trip-time is estimated for example based on knowledge about the network or experience collected on said network or compatible networks. In a further sub-step dbrate, the bit rate is determined of a link L13, RL1 belonging to a path across which the connection between the parties is set up. The pipe capacity of a link is the minimum number of bytes a sending party needs to have in flight to fully utilize its available bandwidth. It can be calculated as the product of bit rate and round trip time in the sub-step dtcap. Afterwards the step 203 ends in the sub-step enddpcap. In a preferred embodiment of the invention, the bit rate on the bottleneck link is determined for the estimation of the pipe capacity. In the depicted connection this is the radio link RL1. Thus, the pipe capacity is simply the product of the radio bearer RL1 bit rate and the round-trip delay between the proxy P1 and the mobile terminal UE1. It is known to a person skilled in the art that the proxy P1 can attain knowledge about the mentioned bit rate and round-trip delay associated with a specific TCP connection. For example, on request from the proxy P1 the network for mobile telecommunications RN1 could signal that information to the proxy P1, or the proxy P1 could have access to a profile database where that information is kept.

In an embodiment of the invention, connections with the same pipe capacity are grouped.

In a preferred embodiment of the invention, in order to reduce the number of executions of the invented method, not only connections with exactly the same pipe capacity are treated equally, but also connections within a predefined range of pipe capacities.

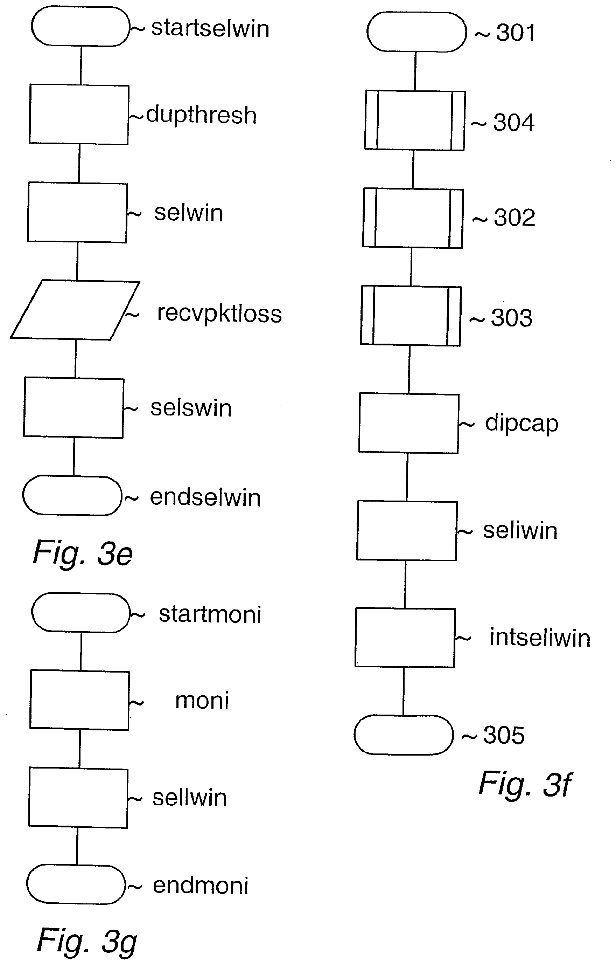

The figures 3c, 3d, and 3e are used to describe step 204 in more detail. The embodiment of step 204 as depicted in figure 3c comprises the sub-steps of starting the step startselwin, of determining an upper threshold value for a window size dupthresh, of selecting a window size, and of ending the step endselwin. The upper threshold value of a window size is determined as twice the pipe capacity of the connection the window is used for. A window size above twice the pipe capacity does not increase the performance of a connection. In the next sub-step selwin a window size is determined. Said window size has a value above zero and below or equal to the upper threshold value. In a preferred embodiment of the invention, the value is higher than the pipe capacity of the connection. The higher the value, the smaller the loss of transmission capacity, but the risk of congestion or of losing packets increases.

Figure 3d depicts an embodiment of step 204, with the additional sub-step store selected window size sselwin. The selected window size is stored to be reused for the same connection if a packet is lost. In an embodiment of the invention, the stored window size is stored together with an indication of the pipe capacity or the range of pipe capacities the connection belongs to and is used for another connection with the same pipe capacity or within the same predefined range of pipe capacities. In a preferred embodiment of the invention, the stored window size is stored together with an indication of the pipe capacity or the range of pipe capacities the connection belongs to and an identification of the destination for the connection, and the window size is used for another connection with the same pipe capacity or with a pipe capacity that falls into the same predefined range of pipe capacities only if it has the same destination.

Figure 3e depicts an embodiment of step 204, with the additional sub-steps of receiving an indication of a packet loss recvpktloss and of selecting a new, smaller window size selswin. In the sub-step of receiving an indication of a packet loss recvpktloss, an indication is received that a packet of an initial flight was lost. An initial flight is a number of packets send in a first window after a set-up or a restart of a connection. If one of the packets sent in an initial flight is lost, congestion can be assumed. Therefore, a new, smaller window size is selected in the sub-step selswin. In a preferred embodiment of the invention, the new window size is half the former window size unless the window size is already one maximum segment size. In the following the size of a window is measured in multiples of a maximum segment size to make it easier for a person skilled in the art to understand the invention. In a preferred embodiment of the invention the new selected window size is stored and used as described by figure 3d.

Figure 3f depicts an embodiment of the invented method with the additional steps of determining an increase of pipe capacity for a connection dipcap, selecting an increased window size for the connection seliwin, and of introducing the increased window size for the connection intseliwin. In the case that a pipe capacity of a connection is increased, for example because a radio link receives more bandwidth, an indication is sent to a window size selecting unit. The window size selecting unit selects a new window size for a congestion window in a step seliwin. A congestion window defines the number of packets that may be sent before an acknowledgement is received at the sender. The congestion window is set to the size of a loss window after a packet loss, of an initial window when a connection is set up, or of a restart window when a connection is restarted. During an active for example TCP connection, the congestion window size varies. It should be noted that the change of a window size changes the size of the first congestion window after a set-up of, restart of or packet loss on a connection. In the following embodiments however, the size of a congestion window is changed in the latter use of a connection. In a preferred embodiment the congestion window size is increased linearly until either an upper threshold value is reached or a congestion indication is received. If a congestion indication is received, the congestion window size reduced to about half its former value. At the step seliwin, the window size selecting unit determines whether there is already a window size stored for connections of the same pipe capacity or within the same range of pipe capacity as the increased pipe capacity. If so, the stored window size will be used for the congestion window size. In a preferred embodiment stored value will be used only if the identification of the stored destination for the value matches with an identification of the destination of the connection. If no stored window size is available, the new window size is selected as a value that is a multiple of the new pipe capacity. In a preferred embodiment of the invention, the new window size is in a range between the increased pipe capacity and twice the increased pipe capacity.

The new window size is introduced for the use for the connection in a next step intselwin. In a first sub-step the upper threshold value for a window size is set to twice the increased pipe capacity plus or minus two maximum segment sizes. Three alternative embodiments are introduced for introducing from there on in more detail. In a first and preferred embodiment of introducing the new congestion window size, the slow start threshold value of the connection is set to the selected window size value. This leads to a faster than linear increase of the congestion window size used for the connection. In a second embodiment, the congestion window used for the connection is set to the selected window size. By this, the new congestion window size is used immediately for the connection. In a third embodiment, no further action is taken which leads to a linear increase of the congestion window size.

Figure 3g depicts a sequence of additional steps that are implemented in an embodiment of the invented method. In a first step startmoni the sequence is started. In a next step moni connections with the same pipe capacity or with a pipe capacity that falls into the same predefined range of pipe capacities are monitored whether a congestion indication is received for an initial flight, a restart flight or a loss flight. A flight is a number of packets send within a congestion window. If the flight is the first flight sent after a set-up of a connection, it is called initial flight and the number of packets is related to the initial window size. If the flight is the first flight sent after a restart of a connection, it is called restart flight and the number of packets is related to the restart window size. If the flight is the first flight sent after a packet loss on a connection, it is called loss flight and the number of packets is related to the loss window size. The monitoring is performed for a certain predefined time interval or for a predefined number of connections set-ups or restarts. If the time for the monitoring expires or the predefined number of connection set-ups or restarts is reached, the monitoring is terminated. It is then assumed that the window sizes can be increased for future set-ups or restarts.

Therefore increased new window size values are determined in a next step sellwin. In a preferred embodiment of the invention, the window size is increased by a predefined constant value. The sequence of additional steps in ended in a step endmoni.

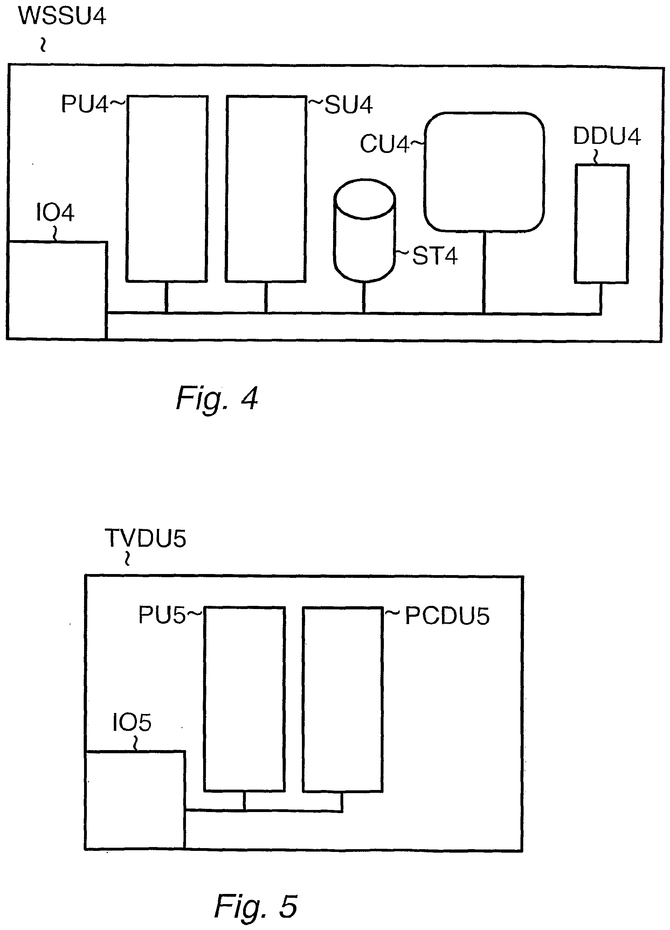

Figure 4 depicts a window size selecting unit WSSU4. Said unit comprises an input/output unit IO4 for receiving and sending data, a processing unit PU4 for controlling and coordinating the other units, a selecting unit SU4 for selecting a window size, a store ST4 for storing window sizes, a comparing unit CU4 for comparing stored pipe capacities and determined pipe capacities or the respective predefined ranges, and a destination determining unit DDU4. The units comprised in the window size selecting unit WSSU4 can be implemented as depicted in a single housing or may be distributed within a node or even among several nodes. The units may be realised by means of hardware of software or a combination of both. In an embodiment of the window size selecting unit WSSU4 a destination determining unit DDU4 is optional. In another embodiment of the invention, the comparing unit CU4 is adapted to compare stored destinations and determined destinations.

In an embodiment of the invention, the initial window, the loss window and the restart window are of the same size.

After booting of an entity that is adapted to act as a sending party, initial values are set for the initial window, the loss window and the restart window in said entity. An embodiment is to choose the pipe capacity as this initial value. A preferred embodiment is to choose the twice the pipe capacity as this initial value.

**Claims**

1. Method for selecting a window size for a packet switched connection between a first and a second party (UE1, P1, S1), wherein a sending party (UE1, P1, S1) uses a window based congestion control mechanism for avoiding or handling congestion on a communication path (RL1, L13, L12, IP1, L11) used for said connection, a window size defining the maximum number of data packets that can be sent by a sending party before an acknowledgement of the reception of a packet is received by said sending party, and wherein the following steps are performed when executing the method:

   - retrieving information about a bit rate of a link belonging to a path across which the connection between the parties is set up (dbrate),
   - retrieving information about an estimation of a round trip time on the connection between the parties (drtt),
   - determining an estimation of a pipe capacity for the connection between the parties according to the retrieved bit rate and the round trip time of the connection (dtcap),
   - determining an upper threshold value for the window size based on the pipe capacity (dupthresh), and
   - selecting a window size value above zero and below or equal to the upper threshold value (selwin)

   **characterized in that**
   the selected window size is used for a further connection with the same pipe capacity or with a pipe capacity within the same predefined range of pipe capacities, that is set-up or restarted.

2. Method according to claim 1, with the additional step of storing (sselwin) the selected window size together with an indication of the pipe capacity, or a predefined range of pipe capacities comprising the pipe capacity, of the connection.

3. Method according to claim 1 or 2, with the additional step of determining a destination of the connection, and wherein the selected window size is stored together with an identification of said destination.

4. Method according to claim 3, wherein the communication system is a cellular communication system and a destination is one of a location area, a routing area, a cell, a service area or an area served by a radio network controller, a mobile services switching centre, a radio base station or a serving general packet radio service support node.

5. Method according to any of the preceding claims, wherein the communication system is a cellular communication system and the link is a wireless link.

6. Method according to any of the preceding claims, wherein a window is one of an initial window, a loss window or a restart window.

7. Method according to any of the preceding claims, wherein a party is one of a proxy server (P1), a mobile user equipment (UE1), a radio network controller, a radio base station or a general packet radio service support node.

8. Method according to any of the preceding claims, wherein the upper threshold value is in a range of plus or minus two packets around twice the pipe capacity or twice the higher value of the predefined range of pipe capacities comprising the pipe capacity of the connection the window is used for.

9. Method according to any of the preceding claims with the additional steps of:

- receiving a congestion indication for a connection before an acknowledgement for all packets sent in an initial window, a loss window, or a restart window, and
- selecting a smaller window size.

10. Method according to claim 9, wherein the selected smaller window size is about half the size of the window size used before, unless the former window size was one.

11. Method according to any of the preceding claims, with the additional step of detecting an increase of the pipe capacity of a connection, and selecting a new window size for said connection, wherein the new congestion window size is one of an initial window size, a loss window size or a restart window size that are used for connections with the same pipe capacity or with a pipe capacity that falls into the same predefined range of pipe capacities as the increased pipe capacity, or wherein, if none of said initial window size, loss window size or restart window size is available, a value is selected that is n times the increased pipe capacity, with n greater than or equal to 1 and smaller than or equal to 2.

12. Method according to claim 11, wherein a congestion window size for the connection is set to the selected window size value.

13. Method according to claim 11, wherein a slow start threshold value for the connection is set to the selected window size value.

14. Method according to any of the preceding claims with the additional steps of:

- monitoring for a predefined number of seconds or number of connection set-ups or restarts that no congestion indication is received for a connection before an acknowledgement for all packets sent in an initial window, a loss window, or a restart window is received, and
- selecting a larger window size that is smaller than or equal to the upper threshold value.

15. Method according to claim 14, wherein the selected larger window size differs from the window size used before by a predefined constant number.

16. Method according to claim 14 or 15, wherein the receiving of a congestion indication, the monitoring, and the selecting of a larger window size are performed separately for different destinations.

17. Window size selecting unit (WSSU4) for a communication system for connecting a first and a second party, wherein a sending party is adapted to use a window based congestion control mechanism for avoiding or handling congestion on a communication path, the window defining the maximum number of data packets that may be sent by a sender before an acknowledgement of the reception of a packet is received by the sender, and wherein the window size selecting unit (WSSU4) comprises an input/output unit (IO4) for sending and receiving data, a processing unit (PU4) for controlling the other units, a selection unit (SU4) for selecting a window size above zero and below or equal to an upper threshold value, wherein the upper threshold value for the window size is determined based on the pipe capacity, for a connection between the parties,
the window size selecting unit (WSSU4) being **characterized by** further comprising a storage (ST4) for storing window sizes for connections of the same pipe capacity or within the same range of pipe capacity together with an information about a pipe capacity and a comparing unit (CU4) for comparing stored pipe capacities and determined pipe capacities.

18. Window size selecting unit (WSSU4) according to claim 17, further comprising a destination determining unit (DDU4) for determining a destination of a connection, wherein the storage (ST4) is adapted to store an identification of a destination together with the window size and the information about a pipe capacity, and wherein the comparing unit (CU4) is adapted to compare stored destinations and determined destinations.

**Patentansprüche**

1. Verfahren zum Auswählen einer Fenstergröße für eine paketvermittelte Verbindung zwischen einem ersten und einem zweiten Teilnehmer (UE, P1, S1), wobei ein sendender Teilnehmer (UE, P1, S1) ein Fenster basierend auf einem Überlaststeuermechanismus zum Vermeiden oder Handhaben von Überlast auf einem für die Verbindung verwendeten Kommunikationsweg (RL1, L13, L12, IP1, L11) verwendet, eine Fenstergröße die maximale Anzahl von Datenpaketen definiert, die von einem sendenden Teilnehmer gesendet werden können, bevor eine Bestätigung des Empfangs eines Pakets durch den sendenden Teilnehmer empfangen wird, und wobei beim Durchführen des Verfahrens die folgenden Schritte ausgeführt werden:

   - Abrufen von Informationen über eine Bitrate einer Strecke, die zu einem Weg gehört, über den die Verbindung zwischen den Teilnehmern hergestellt wird (dbrate),
   - Abrufen von Informationen über eine Schätzung einer Umlaufzeit auf der Verbindung zwischen den Teilnehmern (drtt),
   - Bestimmen einer Leitungskapazität für die Verbindung zwischen den Teilnehmer gemäß der abgerufenen Bitrate und der Umlaufzeit der Verbindung (dtcap),
   - Bestimmen eines oberen Schwellenwerts für die Fenstergröße basierend auf der Leitungskapazität (dupthresh), und
   - Auswählen eines Fenstergrößenwerts über Null und unter oder gleich dem oberen Schwellenwert (selwin),

   **dadurch gekennzeichnet, dass**
   die ausgewählte Fenstergröße für eine weitere Verbindung mit der gleichen Leitungskapazität oder mit einer Leitungskapazität innerhalb des gleichen vordefinierten Bereichs von Leitungskapazitäten verwendet wird, die hergestellt oder neu gestartet wird.

2. Verfahren nach Anspruch 1 mit dem zusätzlichen Schritt des Speicherns (sselwin) der ausgewählten Fenstergröße zusammen mit einer Anzeige der Leitungskapazität oder eines vordefinierten Bereichs von Leistungskapazitäten, der die Leistungskapazität der Verbindung umfasst.

3. Verfahren nach Anspruch 1 oder 2 mit dem zusätzlichen Schritt des Bestimmens eines Ziels der Verbindung, und wobei die ausgewählte Fenstergröße zusammen mit einer Identifikation des Ziels gespeichert wird.

4. Verfahren nach Anspruch 3, wobei das Kommunikationssystem ein zellulares Kommunikationssystem ist, und ein Ziel eines von einem Aufenthaltsgebiet, einem Routing-Gebiet, einer Zelle, einem Versorgungsgebiet oder einem Gebiet ist, das von einer Funknetzsteuerung, eine Mobildienstvermittlungsstelle, einer Funkbasisstation oder einem versorgenden Unterstützungsknoten für allgemeinen paketvermittelten Funkdienst versorgt wird.

5. Verfahren nach einem der vorhergehenden Ansprüche, wobei das Kommunikationssystem ein zellulares Kommunikationssystem ist, und die Strecke eine drahtlose Strecke ist.

6. Verfahren nach einem der vorhergehenden Ansprüche, wobei ein Fenster eines von einem Anfangsfenster, einem Verlustfenster oder einem Neustartfenster ist.

7. Verfahren nach einem der vorhergehenden Ansprüche, wobei ein Teilnehmer eines von einem Proxy-Server (P1), einer mobilen Benutzereinrichtung (UE1), einer Funknetzsteuerung, einer Funkbasisstation oder einem Unterstützungsknoten für allgemeinen paketvermittelten Funkdienst ist.

8. Verfahren nach einem der vorhergehenden Ansprüche, wobei der obere Schwellenwert in einem Bereich von plus oder minus zwei Paketen um das Zweifache der Leitungskapazität oder das Zweifache des höheren Wertes des vordefinierten Bereichs von Leistungskapazitäten liegt, der die Leitungskapazität der Verbindung umfasst, für die das Fenster verwendet wird.

9. Verfahren nach einem der vorhergehenden Ansprüche mit den folgenden zusätzlichen Schritten:

   - Empfangen einer Überlastanzeige für eine Verbindung vor einer Bestätigung für alle in einem Anfangsfenster, einem Verlustfenster oder einem Neustartfenster gesendeten Pakete, und
   - Auswählen einer kleineren Fenstergröße.

**10.** Verfahren nach Anspruch 9, wobei die ausgewählte kleinere Fenstergröße etwa die Hälfte der Größe der vorher verwendeten Fenstergröße ist, sofern die vorherige Fenstergröße nicht Eins war.

**11.** Verfahren nach einem der vorhergehenden Ansprüche mit dem zusätzlichen Schritt des Erkennens einer Erhöhung der Leistungskapazität einer Verbindung und Auswählen einer neuen Fenstergröße für die Verbindung, wobei die neue Überlastfenstergröße eine von einer Anfangsfenstergröße, einer Verlustfenstergröße oder einer Neustartfenstergröße ist, die für Verbindungen mit der gleichen Leitungskapazität oder mit einer Leitungskapazität verwendet werden, die in den gleichen vordefinierten Bereich von Leitungskapazitäten wie die erhöhte Leitungskapazität fällt, oder wobei, wenn keine der Anfangsfenstergröße, der Verlustfenstergröße oder der Neustartfenstergröße verfügbar ist, ein Wert ausgewählt wird, der n-mal die erhöhte Leitungskapazität ist, wobei n größer oder gleich 1 und kleiner oder gleich 2 ist.

**12.** Verfahren nach Anspruch 11, wobei eine Überlastfenstergröße für die Verbindung auf den ausgewählten Fenstergrößenwert gesetzt wird.

**13.** Verfahren nach Anspruch 11, wobei ein Langsamstart-Schwellenwert für die Verbindung auf den ausgewählten Fenstergrößenwert gesetzt wird.

**14.** Verfahren nach einem der vorhergehenden Ansprüche mit den folgenden zusätzlichen Schritten:

- Überwachen einer vordefinierten Anzahl von Sekunden oder einer Anzahl von Herstellungen oder Neustarts von Verbindungen, während derer keine Überlastanzeige für eine Verbindung vor einer Bestätigung für alle in einem Anfangsfenster, einem Verlustfenster oder einem Neustartfenster gesendeten Pakete empfangen wird, und
- Auswählen einer größeren Fenstergröße die kleiner oder gleich dem oberen Schwellenwert ist.

**15.** Verfahren nach Anspruch 14, wobei die ausgewählte größere Fenstergröße sich von der vorher verwendeten Fenstergröße um eine vordefinierte konstante Zahl unterscheidet.

**16.** Verfahren nach Anspruch 14 oder 15, wobei das Empfangen einer Überlastanzeige, das Überwachen und das Auswählen einer größeren Fenstergröße für verschiedene Ziele getrennt durchgeführt werden.

**17.** Fenstergrößenauswahleinheit (WSSU4) für ein Kommunikationssystem zum Verbinden eines ersten Teilnehmers und eines zweiten Teilnehmers, wobei ein sendender Teilnehmer so ausgelegt ist, dass er ein Fenster basierend auf einem Überlaststeuermechanismus zum Vermeiden oder Handhaben von Überlast auf einem Kommunikationsweg verwendet, das Fenster die maximale Anzahl von Datenpaketen definiert, die von einem Sender gesendet werden können, bevor eine Bestätigung des Empfangs eines Pakets durch den Sender empfangen wird, und wobei die Fenstergrößenauswahleinheit (WSSU4) eine Eingabe-/Ausgabeeinheit (IO4) zum Senden und Empfangen von Daten, eine Verarbeitungseinheit (PU4) zum Steuern der anderen Einheiten, eine Auswahleinheit (SU4) zum Auswählen einer Fenstergröße über Null und unter oder gleich einem oberen Schwellenwert umfasst, wobei der obere Schwellenwert für die Fenstergröße basierend auf der Leitungskapazität für eine Verbindung zwischen den Teilnehmern bestimmt wird, wobei die Fenstergrößenauswahleinheit (WSSU4) **dadurch gekennzeichnet ist, dass** sie ferner einen Speicher (ST4) zum Speichern von Fenstergrößen für Verbindungen mit der gleichen Leitungskapazität oder innerhalb des gleichen Leitungskapazitätsbereichs zusammen mit einer Information über eine Leitungskapazität und eine Vergleichseinheit (CU4) zum Vergleichen gespeicherter Leistungskapazitäten und bestimmter Leistungskapazitäten umfasst.

**18.** Fenstergrößenauswahleinheit (WSSU4) nach Anspruch 17, ferner umfassend eine Zielbestimmungseinheit (DDU4) zum Bestimmen eines Ziels einer Verbindung, wobei der Speicher (ST4) so ausgelegt ist, dass er eine Identifikation eines Ziels zusammen mit der Fenstergröße und der Information über eine Leistungskapazität speichert, und wobei die Vergleichseinheit (CU4) so ausgelegt ist, dass sie gespeicherte Ziele und bestimmte Ziele vergleicht.

**Revendications**

**1.** Procédé de sélection d'une taille de fenêtre pour une connexion à commutation de paquets entre une première partie et une deuxième partie (UE1, P1, S1), dans lequel une partie d'envoi (UE1, P1, S1) utilise un mécanisme de commande de congestion basé sur fenêtre pour éviter ou gérer une congestion sur une voie de communication (RL1, L13, L12, IP1, L11) utilisée pour ladite connexion, une taille de fenêtre définissant le nombre maximum de paquets de données pouvant être envoyés par une partie d'envoi avant la réception d'un accusé de réception de la réception d'un paquet par ladite partie d'envoi, et dans lequel les étapes suivantes sont effectuées lors de l'exécution du procédé :

- la récupération d'informations relatives à un débit binaire d'une liaison appartenant à une voie sur laquelle la connexion entre les parties est établie (dbrate),
- la récupération d'informations relatives à une estimation d'un temps aller-retour sur la connexion entre les parties (drtt),
- la détermination d'une estimation d'une capacité de conduit pour la connexion entre les parties en fonction du débit binaire récupéré et du temps aller-retour de la connexion (dtcap),
- la détermination d'une valeur de seuil supérieure pour la taille de fenêtre sur la base de la capacité de conduit (dupthresh), et
- la sélection d'une valeur de taille de fenêtre supérieure à zéro et inférieure ou égale à la valeur de seuil supérieure (selwin),

**caractérisé en ce que**
la taille de fenêtre sélectionnée est utilisée pour une autre connexion avec la même capacité de conduit ou avec une capacité de conduit à l'intérieur de la même plage prédéfinie de capacités de conduit qui est établie ou redémarrée.

2. Procédé selon la revendication 1, comprenant en outre l'étape de la mémorisation (sselwin) de la taille de fenêtre sélectionnée avec une indication de la capacité de conduit, ou une plage prédéfinie de capacités de conduit comprenant la capacité de conduit, de la connexion.

3. Procédé selon la revendication 1 ou 2, comprenant en outre l'étape de la détermination d'une destination de la connexion, et dans lequel la taille de fenêtre sélectionnée est mémorisée avec une identification de ladite destination.

4. Procédé selon la revendication 3, dans lequel le système de communication est un système de communication cellulaire et une destination est l'une d'une zone d'emplacement, d'une zone d'acheminement, d'une cellule, d'une zone de service ou d'une zone desservie par un organe de commande de réseau radio, un centre de commutation de services mobiles, une station de base radio ou un noeud de prise en charge de service radio en paquets général de desserte.

5. Procédé selon l'une quelconque des revendications précédentes, dans lequel le système de communication est un système de communication cellulaire et la liaison est une liaison sans fil.

6. Procédé selon l'une quelconque des revendications précédentes, dans lequel une fenêtre est l'une d'une fenêtre initiale, d'une fenêtre de perte d'une fenêtre de redémarrage.

7. Procédé selon l'une quelconque des revendications précédentes, dans lequel une partie est l'un d'un serveur proxy (P1), d'un équipement d'utilisateur mobile (UE1), d'un organe de commande de réseau radio, d'une station de base radio ou d'un noeud de prise en charge de service radio en paquets général.

8. Procédé selon l'une quelconque des revendications précédentes, dans lequel la valeur de seuil supérieure est dans une plage de plus ou moins deux paquets autour de deux fois la capacité de conduit ou de deux fois la valeur supérieure de la plage prédéfinie de capacités de conduit comprenant la capacité de conduit de la connexion pour laquelle la fenêtre est utilisée.

9. Procédé selon l'une quelconque des revendications précédentes, comprenant en outre les étapes de :

- la réception d'une indication de congestion pour une connexion avant un accusé de réception pour tous les paquets envoyés dans une fenêtre initiale, une fenêtre de perte ou une fenêtre de redémarrage, et
- la sélection d'une taille de fenêtre inférieure.

10. Procédé selon la revendication 9, dans lequel la taille de fenêtre inférieure sélectionnée est égale à environ la moitié de la taille de la taille de fenêtre utilisée auparavant, sauf si la taille de fenêtre antérieure était un.

**11.** Procédé selon l'une quelconque des revendications précédentes, comprenant en outre les étapes de la détection d'une augmentation de la capacité de conduit d'une connexion, et la sélection d'une nouvelle taille de fenêtre pour ladite connexion, dans lequel la nouvelle taille de fenêtre de congestion est l'une d'une taille de fenêtre initiale, d'une taille de fenêtre de perte ou d'une taille de fenêtre de redémarrage qui est utilisée pour des connexions avec la même capacité de conduit ou avec une capacité de conduit dans la même plage prédéfinie de capacités de conduit en tant que la capacité de conduit accrue, ou dans lequel, si aucune de ladite taille de fenêtre initiale, de ladite taille de fenêtre de perte ou de ladite taille de fenêtre de redémarrage n'est disponible, il est sélectionné une valeur qui est égale à n fois la capacité de conduit accrue, n étant supérieur ou égal à 1 et inférieur ou égale à 2.

**12.** Procédé selon la revendication 11, dans lequel une taille de fenêtre de congestion pour la connexion est réglée à la valeur de taille de fenêtre sélectionnée.

**13.** Procédé selon la revendication 11, dans lequel une valeur de seuil de démarrage lent pour la connexion est réglée à la valeur de taille de fenêtre sélectionnée.

**14.** Procédé selon l'une quelconque des revendications précédentes, comprenant en outre les étapes de :

- la surveillance, pendant un nombre prédéfini de secondes ou un nombre prédéfini d'établissements ou de redémarrages de connexion, qu'il n'est pas reçu d'indication de congestion pour une connexion avant la réception d'un accusé de réception pour tous les paquets envoyés dans une fenêtre initiale, une fenêtre de perte ou une fenêtre de redémarrage, et
- la sélection d'une taille de fenêtre supérieure qui est inférieure ou égale à la valeur de seuil supérieure.

**15.** Procédé selon la revendication 14, dans lequel la taille de fenêtre supérieure sélectionnée diffère de la taille de fenêtre utilisée auparavant d'un nombre constant prédéfini.

**16.** Procédé selon la revendication 14 ou 15, dans lequel la réception d'une indication de congestion, la surveillance et la sélection d'une taille de fenêtre supérieure sont effectuées séparément pour différentes destinations.

**17.** Unité de sélection de taille de fenêtre (WSSU4) pour un système de communication pour une connexion d'une première partie et d'une deuxième partie, dans laquelle une partie d'envoi est apte à utiliser un mécanisme de commande de congestion basé sur fenêtre pour éviter ou gérer une congestion sur une voie de communication, la fenêtre définissant le nombre maximum de paquets de données pouvant être envoyés par un émetteur avant la réception d'un accusé de réception de la réception d'un paquet par l'émetteur, et dans laquelle l'unité de sélection de taille de fenêtre (WSSU4) comprend une unité d'entrée/sortie (IO4) pour l'envoi et la réception de données, une unité de traitement (PU4) pour commander les autres unités, une unité de sélection (SU4) pour la sélection d'une taille de fenêtre supérieure à zéro et inférieure ou égale à une valeur de seuil supérieure, dans laquelle la valeur de seuil supérieure pour la taille de fenêtre est déterminée sur la base de la capacité de conduit, pour une connexion entre les parties,
l'unité de sélection de taille de fenêtre (WSSU4) étant **caractérisée en ce qu'**elle comprend en outre une mémoire (ST4) pour mémoriser des tailles de fenêtre pour des connexions de la même capacité de conduit ou à l'intérieur de la même plage de capacités de conduit avec des informations relatives à une capacité de conduit et une unité de comparaison (CU4) pour comparer des capacités de conduit mémorisées et des capacités de conduit déterminées.

**18.** Unité de sélection de taille de fenêtre (WSSU4) selon la revendication 17, comprenant en outre une unité de détermination de destination (DDU4) pour déterminer une destination d'une connexion, dans laquelle la mémoire (ST4) est apte à mémoriser une identification d'une destination avec la taille de fenêtre et les informations relatives à une capacité de conduit, et dans laquelle l'unité de comparaison (CU4) est apte à comparer des destinations mémorisées et des destinations déterminées.

*Fig. 1*

EP 1 523 836 B1

Fig. 2

*Fig. 3a*

*Fig. 3b*

*Fig. 3c*

*Fig. 3d*

~ startselwin

~dupthresh

~ selwin

~ recvpktloss

~ selswin

~ endselwin

*Fig. 3e*

~ startmoni

~ moni

~ sellwin

~ endmoni

*Fig. 3g*

~ 301

~ 304

~ 302

~ 303

~ dipcap

~ seliwin

~ intseliwin

~ 305

*Fig. 3f*

WSSU4

Fig. 4

TVDU5

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0948168 A1

### Non-patent literature cited in the description

- **M. ALLMAN ; V. PAXSON ; W. STEVENS.** TCP Congestion Control, RFC2581. April 1999
- **M. ALLMAN ; S. FLOYD ; C. PARTRIDGE.** Increasing TCP's Initial Window. *RFC2414,* September 1998
- **H. BALAKRISHNAN ; S. SESHAN.** The Congestion Manager. *RFC3124,* June 2001